# EUROPÄISCHE PATENTSCHRIFT

(11) **EP 1 620 227 B1**
(45) Veröffentlichungstag und Bekanntmachung des Hinweises auf die Patenterteilung: **20.02.2019**
(21) Anmeldenummer: 04727524.3
(22) Anmeldetag: 15.04.2004
(51) Int. Cl.: B23Q 1/00

(54) **SPANNSYSTEM MIT ADAPTERTEIL**
CLAMPING SYSTEM COMPRISING AN ADAPTER PART
SYSTEME DE SERRAGE COMPORTANT UNE PIECE D'ADAPTATION

(30) Priorität: 15.04.2003 DE 10317339
(43) Veröffentlichungstag der Anmeldung: 01.02.2006
(73) Patentinhaber: Andreas Maier GmbH & Co. KG, 70734 Fellbach (DE)
(72) Erfinder: STARK, Emil, A-6840 Götzis (AT)
(74) Vertreter: Hoeger, Stellrecht & Partner Patentanwälte mbB
(86) Internationale Anmeldenummer: PCT/EP2004/003970
(87) Internationale Veröffentlichungsnummer: WO 2004/091850

(56) Entgegenhaltungen:
- EP-A- 1 050 363
- DE-A- 3 232 367
- DE-A- 10 123 271
- DE-A- 19 861 091
- DE-A1- 10 123 264
- DE-U- 20 219 338
- DE-U- 29 702 578
- US-A- 5 906 378
- US-A1- 2003 168 795

## Beschreibung

Die Erfindung betrifft ein Schnellspannsystem mit Adapterteil nach dem Oberbegriff des Patentanspruchs 1. Ein Spannsystem, welches an einem relativ großen Außenumfang spannt, ist mit der auf den gleichen Anmelder zurückgehenden DE 101 23 271 A1 bekannt geworden. Vorteil dieses bekannten Systems ist, dass man radial nach außen gerichtete Verriegelungskugeln verwendet, die unter relativ hoher Federkraft eine nach außen gerichtete Verriegelungskraft entfalten, so dass auf einem derartigen Spannsystem große Werkstückpaletten kippsicher und mit hohen Verriegelungskräften gespannt werden können.

Bei der genannten Ausführung wird sogar eine zweifache Verriegelung vorgeschlagen, nämlich eine nach außen gerichtete erste Verriegelung und eine zentrische zweite Verriegelung, um eine darauf aufgesetzte Werkstückpalette an zwei unterschiedlichen Stellen zu verriegeln und zu halten. Es werden ausgezeichnete Genauigkeiten erzielt, wobei die mittige, zentrische Verriegelung der Werkstückpalette dadurch bewerkstelligt ist, dass an der Unterseite der Werkstückpalette ein Einzugsnippel angeordnet ist, der mit dem im Basissystem angeordneten Schnellspannzylinder zusammenwirkt und an diesem verriegelt ist.

Es wird mit der mittigen Spannung lediglich eine Zusatzkraft auf die auf dem Spannsystem aufzuspannenden Werkstückpalette geschaffen.

Wenn es allerdings darum geht, dass man auf dem bekannten Spannsystem etwas schnell wechselbar, mittig und mit hoher Spannkraft spannen will, ist diese doppelte Verriegelung einer Werkstückpalette nicht mehr geeignet.

Die DE 101 23 264 A1 offenbart ein Schnellspannsystem gemäß dem Oberbegriff von Anspruch 1.

Der Erfindung liegt die Aufgabe zugrunde, ein solches Schnellspannsystem so weiterzubilden, dass bei Erzielung einer hohen Spannkraft mit gleichzeitiger Sicherung gegen hohe Verkippungskräfte auch kleine Werkstückpaletten mittig und zentral ausgerichtet auswechselbar gespannt werden können.

Diese Aufgabe wird erfindungsgemäß durch ein Schnellspannsystem nach Anspruch 1 gelöst.

Wesentlich ist, dass zunächst ein als Basissystem bezeichnetes Spannsystem vorhanden ist, welches mit radial nach außen gerichteten Verriegelungskugeln arbeitet und dass auf dem basisseitigen Spannsystem ein Adapterteil aufgesetzt ist, welches mit den radial nach außen gerichteten Verriegelungskugeln des basisseitigen Spannsystems verriegelbar ist und dass in dem Adapterteil mindestens ein selbständig und unabhängig von dem unteren Basissystem arbeitenden Spannsystem angeordnet ist.

In dem Adapterteil ist mindestens ein weiteres, unabhängig von dem basisseitigen Spannsystem arbeitendes Spannsystem angeordnet, mit dem es nun erstmals möglich ist, auf diesem Adapterteil einzelne und voneinander getrennte Werkstückpaletten zu spannen oder auch eine größere Werkstückpalette, die sich in mehrfachem Eingriff mit dem adapterseitigen Spannsystem befindet.

Die Lehre der Erfindung kann als "Huckepack-Technologie" bezeichnet werden. Sie ermöglicht, dass bei Verwendung einer Palette mit integriertem zusätzlichen Schnellspannzylinder (in Form des erfindungsgemäßen Adapterteils) das herkömmliche basisseitige Spannsystem weiter verwendet, werden kann, ohne dass dort Änderungen vorgenommen werden müssen. Es bedarf insbesondere nicht einer Änderung der Aufspannung auf dem Maschinentisch.

Damit ergibt sich der Vorteil, dass nun auf einem Maschinentisch, einem Bearbeitungsturm oder einer sonstigen Einspannplatte ein oder mehrere basisseitige Spannsysteme angeordnet sind, die mit zugeordneten Adapterteilen zusammenwirken. Das Adapterteil ist mit einer oder mehreren Werkstückpaletten
- auf der zu bearbeitende Werkstücke angeordnet sind - im Spanneingriff. Mit diesem System ergibt sich eine Erweiterung der Anwendungsmöglichkeiten bei der Einspannung von Werkstückpaletten.

In einem einfachen, aber nicht unter die Ansprüche fallenden Anwendungsfall kann das Adapaterteil des erfindungsgemäßen Schnellspannsystems entfernt werden, und das basisseitige Spannsystem des erfindungsgemäßen Spannsystems kann direkt mit einer darauf aufgesetzten Lochrasterpalette, einem Schraubstocksystem oder einem anderen Spannsystem verwendet werden.

Wenn es jedoch darum geht, dass man relativ kleine Werkstückpaletten mittig spannen will, dann reicht dieses relativ große, einen großen Spanndurchmesser aufweisende, basisseitige Spannsystem nicht mehr aus, weil man eine kleinere Werkstückpalette dann nicht mehr festhalten und einspannen kann. Hier setzt die Erfindung ein, die vorsieht, dass auf dieses mit großem Durchmesser spannende, basisseitige Spannsystem ein Adapterteil aufgesetzt ist, in dem ein selbständig arbeitendes Spannsystem angeordnet ist, welches mit einem Einzugnippel einer Werkstückpalette zusammenarbeiten kann.

Damit kann der universelle Einsatz eines basisseitigen Spannsystems wesentlich erweitert und verbessert werden, weil es nun erstmals in Anpassung an das basisseitige Spannsystem möglich ist, auch kleinere und verteilt angeordnete Lochrasterpaletten oder Werkstückpaletten zu spannen.

Bei dieser Technologie schafft man nun mit dem basisseitigen Spannsystem eine zentrale Aufnahmebohrung, die vollkommen von Einbauten frei ist (deshalb wird auch von einem basisseitigen, mittig angeordneten Spannsystem gesprochen), so dass man diese freigehaltene, zentrale Aufnahmebohrung als Zentrieröffnung für das darauf aufzusetzende Adapterteil oder für die darauf direkt aufzusetzenden (unter Weglassung des Adapterteils) zu verwendenden Werkstückpaletten verwenden kann.

Insbesondere bei 5-Achsen-Werkstückbearbeitungsmaschinen ist es wichtig, dass eine mittige Basisbohrung (als Meß- und Referenzachse) vorhanden ist, von der ausgehend alle Bearbeitungsschritte vorgenommen werden. Aus diesem Grund ist es sinnvoll, das basisseitige, an sich vorhandene Spannsystem mit der zentralen Aufnahmebohrung freizuhalten, damit man in diese zentrale Aufnahmebohrung wahlweise das Adapterteil oder direkt die Werkstückpalette oder ein sonstiges Teil spannt, auf dem die zu bearbeitenden Werkstücke unmittelbar angeordnet sind.

Die Schaffung einer zentralen, freigehaltenen Mittenaufnahme in dem basisseitigen Spannsystem hat auch den Vorteil, dass das Adaptersystem auch auf Drehmaschinen verwendet werden kann, weil bei derartigen Drehmaschinen nun eine zentrale, mittige Aufnahme vorgesehen ist, welche in der Drehachse der Drehmaschine liegt, so dass in diese zentrale, axiale Aufnahmebohrung mit entsprechenden Bearbeitungswerkzeugen eingefahren werden kann und die auf dem Adapterteil oder der Werkstückpalette angeordneten Werkstücke auch drehend bearbeitet werden können.

Man kann durch die zentrale Aufnahmebohrung mit Stangen und Rohren durchfahren, was vorher nicht möglich war.

Ein weiterer Vorteil der Erfindung liegt darin, dass auch das Adapterteil - weil es selbständig und autark von dem basisseitigen Spannsystem arbeitet - auch selbst als separates und autarkes Spannsystem verwendet werden kann. Bei einer nicht unter die Ansprüche fallenden Konfiguration kann dieses Adapterteil nun unmittelbar - als Ersatz für das basisseitige Spannsystem - auf einem Maschinentisch oder einer Aufspannplatte oder einem Bearbeitungsturm aufgespannt werden und ist dann unmittelbar zur zentrischen mittigen Spannung von Werkstückpaletten geeignet. Dies bedeutet, dass das Adapterteil nicht nur von Fall zu Fall bei der Erfüllung von Spezialaufgaben verwendet werden kann, sondern unabhängig von dem basisseitigen Spannsystem auch für sämtliche anderen Spannaufgaben, wenn das basisseitige Spannsystem nicht benötigt oder auf einer anderen Maschine verwendet ist.

Mit dem erfindungsgemäßen Schnellspannsystem ergibt sich der weitere Vorteil, dass mit einem einzigen basisseitigen Spannsystem (Basiszylinder) nun eine sogenannte Huckepack-Palette verwenden kann, welche im Wesentlichen aus dem vorher genannten Adapterteil besteht.

Ein solches Adapterteil kann mehrere, beispielsweise vier unabhängig voneinander arbeitende Spannsysteme aufweisen. Es handelt sich (bei diesem Ausführungsbeispiel) um eine Vierfach-Huckepack-Palette mit vier Einbauzylindern, die zur Einspannung einer Vielzahl unterschiedlicher Werkstückpaletten verwendet werden können.

Beispielsweise kann eine Mehrfach-Nippel-Palette (d.h. mit mehreren Einzugsnippeln) mit den mehrfachen Spannsystemen des Adapterteils gespannt werden und ebenso kann jedem Spannsystem auf dem Adapterteil eine einzige Minipalette (Werkstückpalette) zugeordnet werden, die deshalb unabhängig voneinander einspannbar und auch lösbar sind.

Eine derartige Vierfachanordnung (wobei die Erfindung selbstverständlich nicht auf die Zahl 4 beschränkt ist) kann in jeder beliebigen Zahl verwendet werden. Somit ergeben sich bei Verwendung einer Huckepack-Palette mit beispielsweise vier Einbauzylindern eine Abarbeitungszeit auf der Werkstückbearbeitungsmaschine, die um das Vierfache gesteigert ist.

Auf dem Adapterteil können bis zu 10 unabhängig arbeitende Spannsysteme angeordnet werden. Diese Spannsysteme können selbstverständlich auch in Abhängigkeit voneinander arbeiten und beispielsweise von einer Drucköl- und/oder Druckluftquelle versorgt werden.

Durch die Tatsache bedingt, dass in dem Adapterteil des erfindungsgemäßen Schnellspannsystems selbständig arbeitende Spannsysteme vorhanden sind, ist es deshalb auch notwendig, entsprechende Mediendurchführungen durch das basisseitige Spannsystem in Richtung auf das darüber eingespannte Adapterteil zu schaffen.

Es werden mehrere Vorschläge für entsprechende Mediendurchführungen (Luft und/oder Öl) vorgeschlagen, wobei wichtig ist, dass diese Mediendurchführungen erst dann eine Verbindung schaffen, wenn das Adapterteil auf das basisseitige Spannsystem aufgesetzt wird.

Damit ist es nun erstmals möglich, von der Seite des Maschinentisches aus sowohl mit der Druckölzuführung und der Druckluftzuführung das basisseitige Spannsystem zu versorgen. Gleichzeitig wird durch die in dem basisseitigen Spannsystem angeordneten Mediendurchführungen das darauf aufgesetzte Adapterteil mit den dort angeordneten Spannsystemen versorgt.

Durch die Verwendung eines Adapterteils erhöht sich die universelle Einsetzbarkeit des Spannsystems nach der Erfindung im wesentlichen Maße.

Neben der Anbringung einer einzigen Minipalette auf dem Adapterteil können auch vier Minipaletten oder eine Vier-Nippel-Lochrasterpalette oder zwei Zwei-Nippel-Lochrasterpalette oder zwei Schraubstöcke auf dem Adapterteil befestigt werden.

Es bleibt dem jeweiligen Anwendungsfall überlassen, ob man eine einfache Huckepack-Palette, eine vierfache Huckepack-Palette oder sonstige Mehrfach-Huckepack-Paletten verwendet.

Das erfindungsgemäße Prinzip besteht darin, dass man ein Adapterteil mit darin eingebauten Schnellspannzylindern verwendet, welches Adapterteil auf einem Schnellspannzylinder im basisseitigen Spannsystem eingespannt ist.

Selbstverständlich ist die Erfindung nicht darauf beschränkt, dass das Adapterteil nur mit einem einzigen Schnellspannzylinder im basisseitigen Spannsystem festgelegt wird. Es kann auch vorgesehen sein, dass das Adapterteil mit mehreren, basisseitigen Spannsystemen auf einem Maschinentisch oder einer Aufspannplatte oder einem Bearbeitungsturm festgelegt wird.

Die Vorteile des Adaptersystems des erfindungsgemäßen Spannsystems bestehen darin, dass durch die Kombination eines großflächigen, basisseitigen Spannsystems mit einem darauf aufgesetzten Adapterteil eine große Z-Auflagefläche erhält, so dass ein solches System gegen Verkippungskräfte gut gesichert ist.

Durch die großflächige Auflage unter hohen Spannkräften wird gleichzeitig auch eine Eliminierung von Vibrationen bei der Bearbeitung von Werkstücken erreicht. Im Rahmen der Zeichnungsbeschreibung wird vorgeschlagen, dass man entweder das Adapterteil auf das basisseitige Spannsystem direkt von oben her aufsetzt oder die beiden Teile ineinander eingreifen lässt, um eine geringe Höhe in der Z-Richtung zu erreichen.

Im Folgenden wird die Erfindung anhand von mehrere Ausführungswege darstellenden Zeichnungen näher erläutert. Hierbei gehen aus den Zeichnungen und ihrer Beschreibung weitere Vorteile der Erfindung hervor.

Es zeigen:
- Figur 1 :: perspektivische Darstellung eines basisseitigen Spannsystems;
- Figur 2:: ein Mittenlängsschnitt durch das Basissystem nach Figur 1;
- Figur 3:: Schnitt durch das Basissystem nach den Figuren 1 und 2;
- Figur 4:: perspektivische Ansicht eines Adapterteils;
- Figur 5:: Schnitt durch den Zusammenbau eines basisseitigen Spannsystems mit einem darauf befestigten Adapterteil;
- Figur 6:: das Adapterteil nach Figur 4 und 5 mit direkter Befestigung auf dem Maschinentisch im Schnitt, ohne das basisseitige Spannsystem des erfindungsgemäßen Schnellspannsystems;
- Figur 7:: eine zweite Ausführungsform eines Zusammenbaus im Vergleich zu Figur 5 zwischen einem basisseitigen Spannsystem und einem Adapterteil;
- Figur 8:: die perspektivische Draufsicht eines weiteren Adapterteils mit einem Vierfach-Spannsystem,
- Figur 9:: das Adapterteil nach Figur 8 mit vier darauf aufgesetzten Mini-Werkstückpaletten,
- Figur 10:: Schnitt durch eine weitere Ausführungsform eines Spannsystems mit dem Adapterteil nach Figur 9,
- Figur 11 :: eine weitere Ausführungsform eines Spannsystems, das ein geändertes Adapterteil umfasst, welches mit geringer Bauhöhe ein basisseitiges Spannsystem übergreift,
- Figur 12:: Schnitt durch ein weiteres Adapterteil mit einer darauf befestigten Werkstückpalette mit Mehrfachnippeln,
- Figur 13:: die Befestigung einer Lochrasterpalette direkt auf einem basisseitigen Spannsystem, ohne das Adapterteil des erfindungsgemäßen Schnellspannsystems,
- Figur 14:: die nicht unter die beigefügten Ansprüche fallende Befestigung einer Werkstückpalette auf einem basisseitigen Spannsystem mit einem darauf befestigten Schraubstock,
- Figur 15:: die nicht unter die beigefügten Ansprüche fallende Befestigung einer Backenfutter-Palette unmittelbar auf einem basisseitigen Spannsystem,
- Figur 16:: die nicht unter die beigefügten Ansprüche fallende Befestigung eines Adapterteils mit einer darauf angeordneten Spanneinrichtung auf einem basisseitigen Spannsystem mit Darstellung der Mediendurchführungen,
- Figur 17:: eine gegenüber Figur 16 abgewandelte, unter die beigefügten Ansprüche fallende Ausführungsform mit einer basisseitigen Mediendurchführung, sowie mit einer Mediendurchführung im Adapterteil in Richtung auf ein mittleres Schnellspannsystem,
- Figur 18:: ein erstes Beispiel einer Mediendurchführung,
- Figur 19:: ein zweites Beispiel einer Mediendurchführung,
- Figur 20:: ein drittes Beispiel einer Mediendurchführung,
- Figur 21:: ein viertes Beispiel einer Mediendurchführung,
- Figur 22:: die Draufsicht auf ein Adapterteil mit Darstellung der Mediendurchführungen,
- Figur 23:: Teilschnitt durch die Anordnung nach Figur 22 mit Darstellung der Mediendurchführungen,
- Figur 24:: eine vergrößerte Darstellung der Mediendurchführung nach Figur 23.

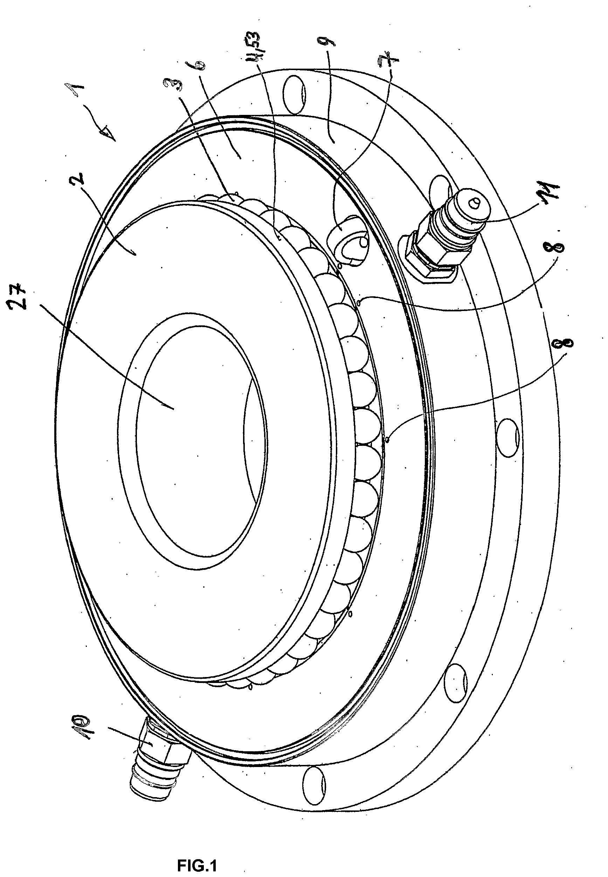

In Figur 1 ist allgemein ein basisseitiges Spannsystem 1 dargestellt, welches auf einem Maschinentisch, einer Aufspannplatte oder einem Bearbeitungsturm befestigt sein kann. Es besteht im Wesentlichen aus einem etwa topfförmigen Gehäuse 9, in dessen Innenraum eine zentrale, mittige Aufnahmebohrung 27 ausgebildet ist.

Im Bereich des Gehäuses 9 ist eine Verriegelungseinrichtung angeordnet, die mit am Umfang verteilt angeordneten Verriegelungskugeln 3 arbeitet, die an der Unterseite eines gleichfalls topfförmig angeordneten Zentriergehäuses 2 angeordnet sind. Das Zentriergehäuse 2 ist mit Hilfe von Befestigungsschrauben 17 mit dem Gehäuse 9 verbunden. Das Gehäuse 9 ist mit Hilfe von Befestigungsschrauben 16 - an deren Unterseite T-Nutensteine 15 angeordnet sind - in T-Nuten 14 im Maschinentisch: 13 befestigt.

Das Zentriergehäuse 2 zentriert sich mit einem Zentrierrand 4 an einem Schutzring 5, der zur Abdeckung des Gehäuses dient.

In das Gehäuse führen in an sich bekannter Weise Anschlussflansche hinein, wobei an der einen Seite ein Ölanschluss 10 und an der gegenüberliegenden Seite ein Luftanschluss 11 angeordnet sind.

Das Gehäuse 2 bildet im übrigen eine obere, horizontale Auflage 6, auf der das noch zu beschreibende Adapterteil aufgelegt wird. Ebenso können unmittelbar auf dieser Auflage auch Werkstückpaletten (z. B. die Werkstückpalette 42) befestigt werden, wobei zur Zentrierung und zur Verdrehungssicherung eine Zentrierung 7 vorhanden ist. Auf diese Zentrierung 7 wird später noch näher eingegangen. Im Bereich der Auflage sind am Umfang verteilt mehrere Ausblaslöcher 8 zum Ausblasen von Luft vorgesehen.

Wenn über den Ölanschluss 10 Drucköl in einen entsprechenden Kanal eingeführt wird, wird dieses in einen Druckraum 22 eingeleitet und betätigt dort in vertikaler Verschiebungsrichtung einen Verriegelungskolben 12, der mit den Verriegelungskugeln 3 zusammenwirkt.

Statt der Verwendung von Öl kann selbstverständlich auch Luft oder eine andere Flüssigkeit (insbesondere Glykol) verwendet werden.

Durch die Spannstellung der Kugeln 3 wird erreicht, dass die Federn 21 jeweils den Verriegelungskolben 12 in die Spannstellung nach oben drücken, wodurch die Verriegelungskugeln 3 radial auswärts aus dem Gehäuse 9 verdrängt werden.

Umgekehrt wird zur Entriegelung Drucköl in den Ölanschluss 10 gegeben, wodurch der Druckraum 22 mit Öl gefüllt wird und hierbei der Verriegelungskolben 12 nach unten fährt und die Verriegelungskugeln 3 an radial einwärts zugeordneten Schrägen zurückrollen. Am Außenumfang der Auflage 6 ist ein umlaufender Dichtring 20 angeordnet. ,

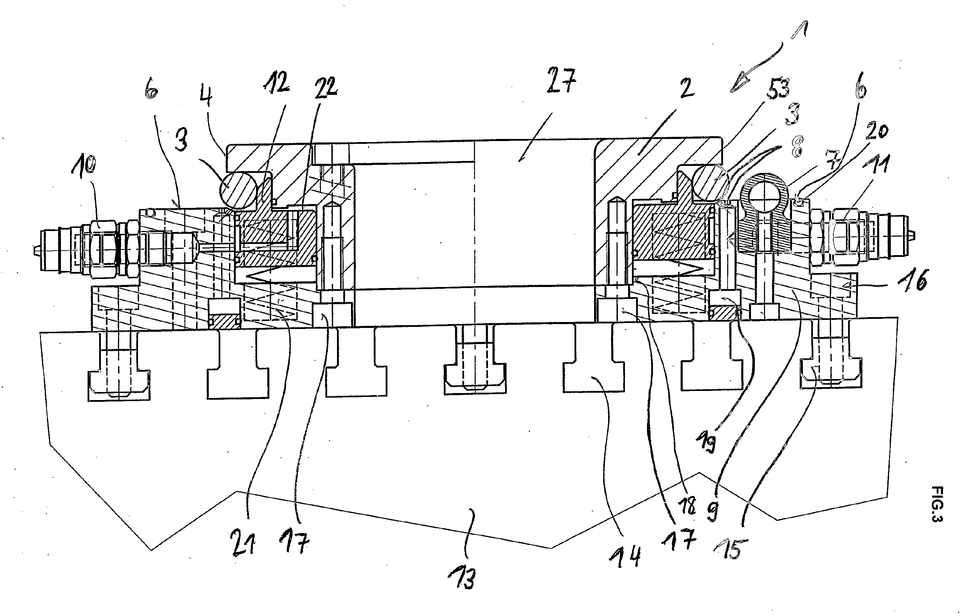

Vom Luftanschluss 11 ausgehend gelangt die Luft in zugeordnete Steig- und Verteilbohrungen und schließlich dann in einen umlaufenden Ringkanal 19, von dem ausgehend sie über zugeordnete Steigbohrungen in voneinander getrennt gerichtete Ausblaslöcher 8 (siehe Figur 3) geleitet wird.

Das Zentriergehäuse 2 wird im übrigen mit Übermaß gefertigt und liegt deshalb an einem zugeordneten Zentrieransatz 19 in zwei voneinander senkrechten Richtungen vorgespannt an, so dass er dort verschiebungsgesichert gelagert ist.

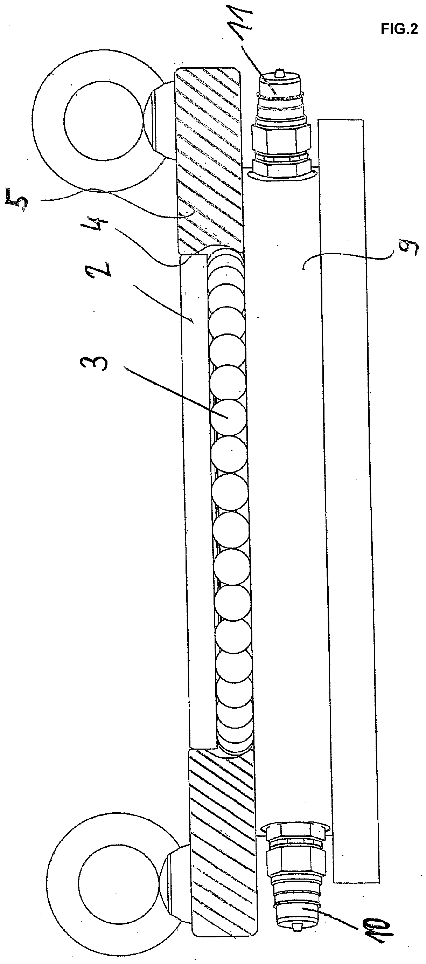

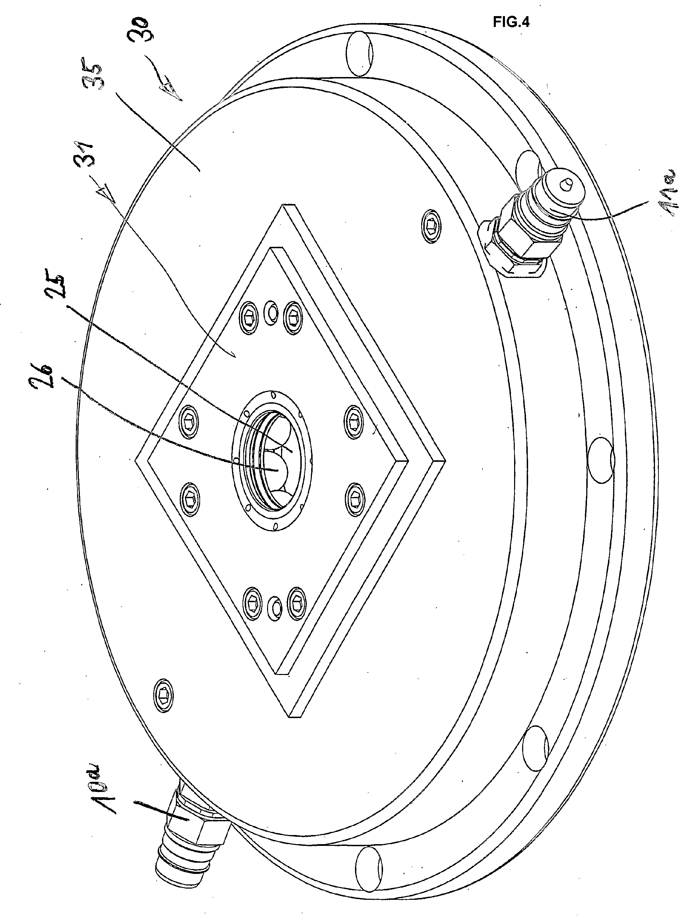

Die Figuren 4 bis 6 zeigen eine erste Ausführungsform eines Schnellspannsystems mit einem Adapterteil 30, welches zur Verriegelung mit dem vorher nach den Figuren 1 bis 3 beschriebenen, basisseitigen Spannsystems 1 bestimmt ist.

Das Adapterteil 30 nach Figur 4 besteht zunächst aus einem topfförmigen Adaptergehäuse 35, in dessen zentraler Aufnahme 36 ein adapterseitiges Spannsystem 31 angeordnet ist.

Dieses adapterseitige Spannsystem umfasst einen Schnellspannzylinder. Nur als Ausführungsbeispiel wird dargestellt, dass es ebenfalls mit Verriegelungskugeln 26 arbeitet, die sich unter der Einwirkung von Federn spannend an den Außenumfang eines zugeordneten Einzugsnippels 24 anlegen. Es ist ebenso ein mit Drucköl beaufschlagter Verriegelungskolben vorhanden, der bei der Beaufschlagung mit Drucköl gegen die Kraft der Federn verschoben wird und damit die Verriegelungskugeln 26 aus dem Verriegelungseingriff mit dem Einzugsnippel 24 bringt. Der Einzugsnippel 24 ist an der Unterseite an der Werkstückpalette 23 angeordnet, auf der - in nicht näher dargestellter Weise - weitere Spannwerkzeuge oder unmittelbar die zu bearbeitenden Werkstücke angeordnet sind.

Der Einzugsnippel 24 wird in die zentrale Aufnahmebohrung 25 des adapterseitigen Spannsystems 31 eingefahren und dort verriegelt.

Die adapterseitige Aufnahmebohrung 36 befindet sich fluchtend und genau zentrisch zu der basisseitigen, im Spannsystem angeordneten, Aufnahmebohrung 27, so dass damit eine zentrische, durchgehende, hochgenaue Achse für die Bearbeitung von Werkstücken geschaffen wird.

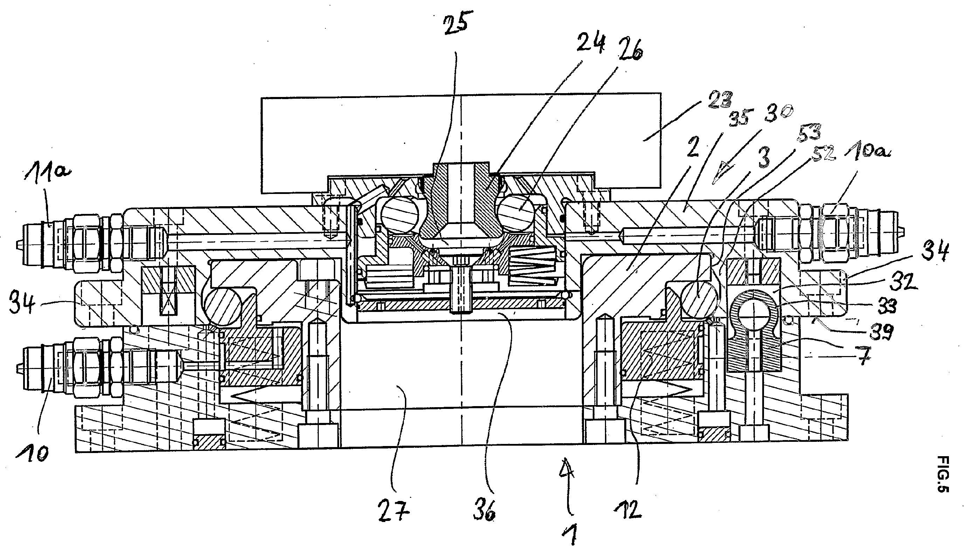

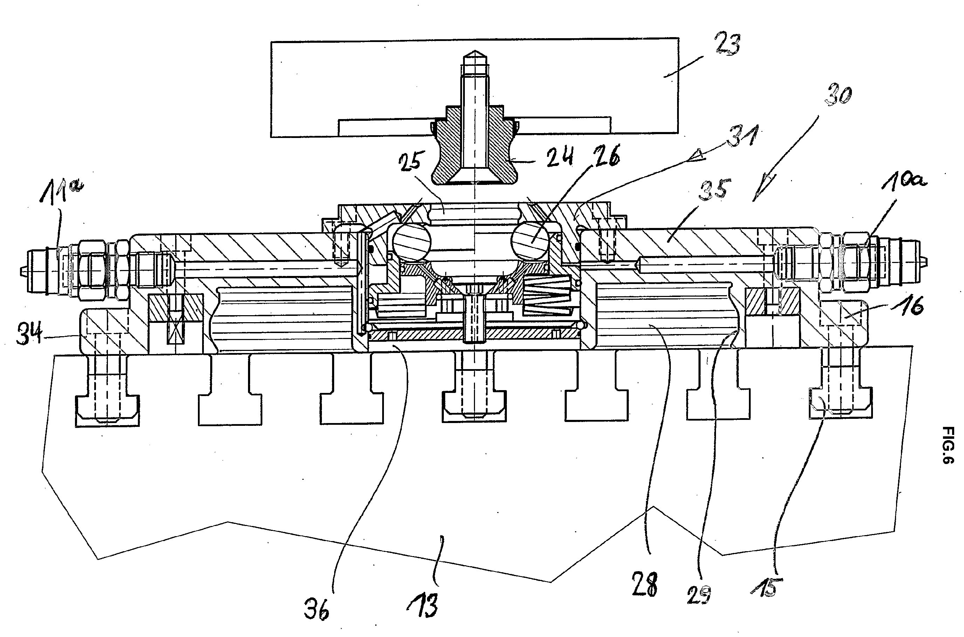

Wie in Figuren 5 und 6 dargestellt, ist an der Unterseite des Adapterteils 30 ein zentraler Aufnahmeraum 28 angeordnet, an dem entsprechende Klemmflächen (Kugelanlageflächen 29) angeordnet sind. Hier erfolgt die Verriegelung mit den zugeordneten Verriegelungskugeln 3 des basisseitigen Spannsystems 1. Damit wird das Adapterteil 30 mit dem basisseitigen Spannsystem 1 über die Verriegelungskugeln 3 festgeklemmt. Damit ergibt sich der wesentliche Vorteil, dass die Verriegelungskugeln 3 in großem Spanndurchmesser angeordnet mit radial nach außen gerichteter Spannkraft arbeiten und hiermit das Adapterteil 30 großflächig gespannt wird. Gleichzeitig wird aufgrund der Schräge der vorgesehenen Kugelanlageflächen 29 das Adapterteil 30 mit hoher Einzugskraft auf das basisseitige Spannsystem 1 heruntergezogen und dort gegen Abheben gesichert festgehalten.

Damit ist eine ausgezeichnete Sicherung gegen Vibrationen gegeben, weil damit eine großflächige Spannfläche an der Unterseite des Adapterteils 30 geschaffen ist.

Gleichzeitig zeigt die Figur 5, dass es eine formschlüssige Zentrierung zwischen dem basisseitigen Spannsystem 1 und dem Adapterteil 30 gibt. Im gezeigten Ausführungsbeispiel besteht die formschlüssige Zentrierung 7 aus einem etwa rohrförmigen Zentrierkopf 33, der elastisch verformbar mit Übermaß in eine zugeordnete, etwa V-förmig profilierte Zentriernut 32 an der Unterseite des Adapterteils 30 eingreift.

Beim Aufsetzen des Adapterteils 30 auf die Auflagefläche 39 des basisseitigen Spannsystems 1 kommt somit die Zentrierung 7 in Eingriff und sichert das Adapterteil 30 gegen Verdrehung und Änderung der Lagenorientierung.

Die Lagensicherung und die Zentrierung der Werkstückpalette 23 an dem oberen adapterseitigen Spannsystem 31 muss relativ genau mit der Lagensicherung und Zentrierung des Adapterteils 30 an dem basisseitigen Spannsystem übereinstimmen. Zwischen diesen beiden Zentrierungen darf kein Spiel, kein Lagenfehler oder eine Verdrehung vorhanden sein.

Die Figur 5 zeigt im Vergleich zu Figur 6 im übrigen, dass am Außenumfang des Adapterteils 30 ein radial nach außen gerichteter Anschraubring 34 vorhanden ist, der im Ausführungsbeispiel nach Figur 5 als Tragegriff für die gesamte Anordnung dient.

Figur 6 zeigt, dass der Anschraubring 34 als Aufspannring für die Befestigung des Adapterteils 30 unmittelbar auf einem Maschinentisch dient.

Wie in der allgemeinen Beschreibung ausgeführt wurde, dient der Adapterteil 30 (und auch die später zu beschreibenden Adapterteile 40, 50, 60) des erfindungsgemäßen Schnellspannsystems nicht nur zur Verwendung mit einem basisseitigen Spannsystem, sondern es kann unmittelbar auch auf einen Maschinentisch 13 oder auf einer Aufspannfläche oder einem Bearbeitungsturm aufgespannt werden.

Damit ist es möglich, mittels des adapterseitigen Spannsystems 31 auch kleinere Werkstückpaletten 23 zentrisch zu spannen.

Damit braucht nur noch die Lochrasterpalette oder die Werkstückpalette 23 schnell ausgewechselt und schnell gespannt werden, nicht aber die Zuordnung zwischen einem basisseitigen Spannsystem 1 und dem Adapterteil 30.

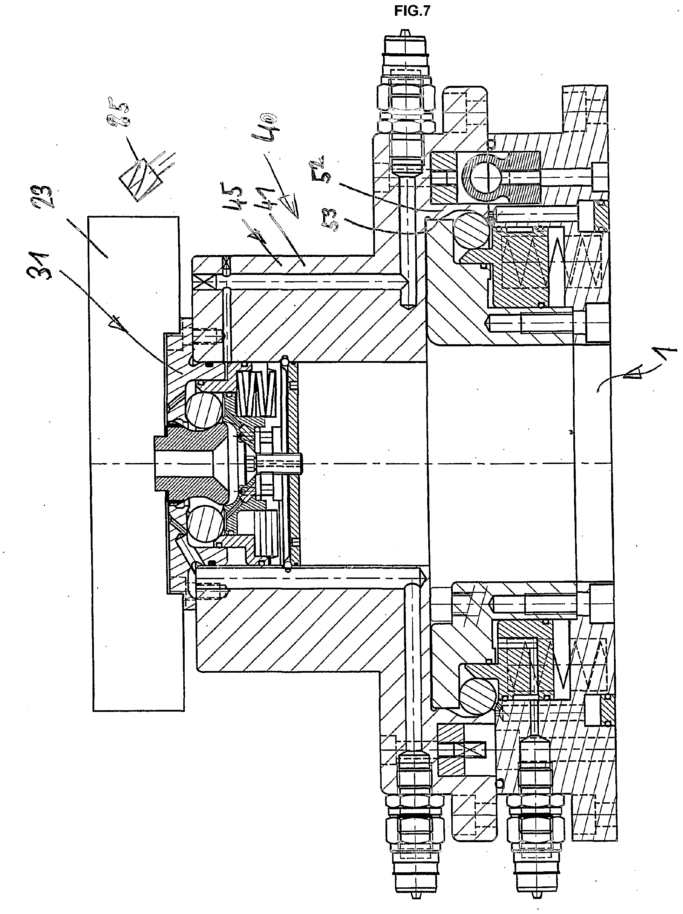

Die Figur 7 zeigt im Vergleich zu den Figuren 5 und 6 eine weitere Ausführungsform eines Spannsystems mit einem Adapterteil 40. Das Adapterteil 40 weist einen Ansatz 41 vergrößerter axialer Länge auf, so dass ein solches Adapterteil 40 in beträchtlicher Höhe über einem basisseitigen Spannsystem 1 eingespannt werden kann und dann an seiner Oberseite wiederum das adapterseitige Spannsystem 31 trägt, welches mit beispielsweise einer Werkstückpalette 23 verbunden werden kann.

Die Höhe des Ansatzes 41 ist besonders dann vorteilhaft, wenn bei der Bearbeitung von Werkstücken auf der Werkstückpalette 23 ein Hintergriff gefordert wird, d. h. wenn mit einem Bearbeitungswerkzeug 85 schräg von unten bearbeitet werden muss, wie dies in Figur 7 dargestellt ist. Ansonsten gelten für die gleichen Teile die gleichen Erläuterungen, wie vorstehend angegeben.

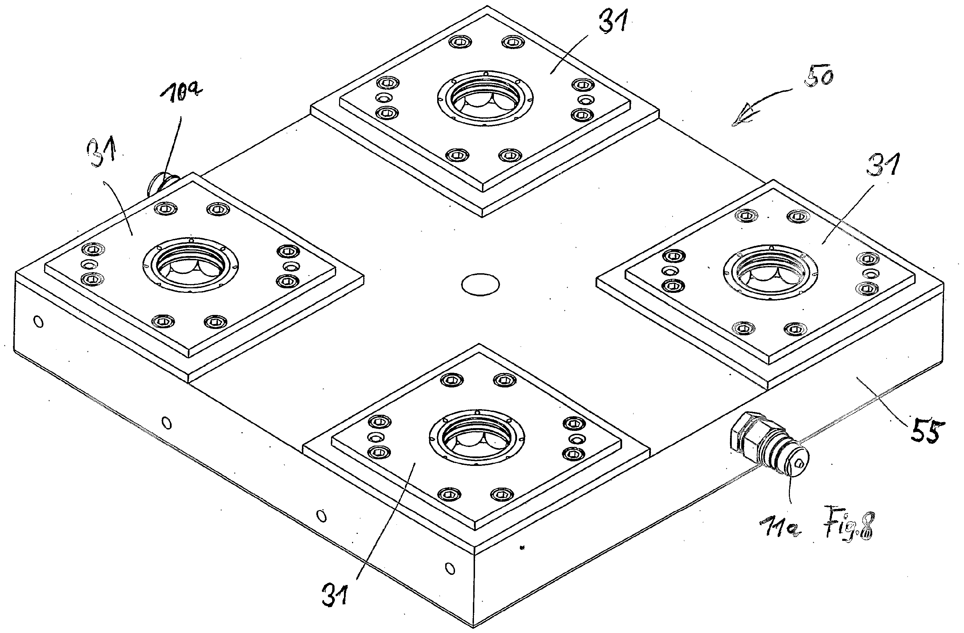

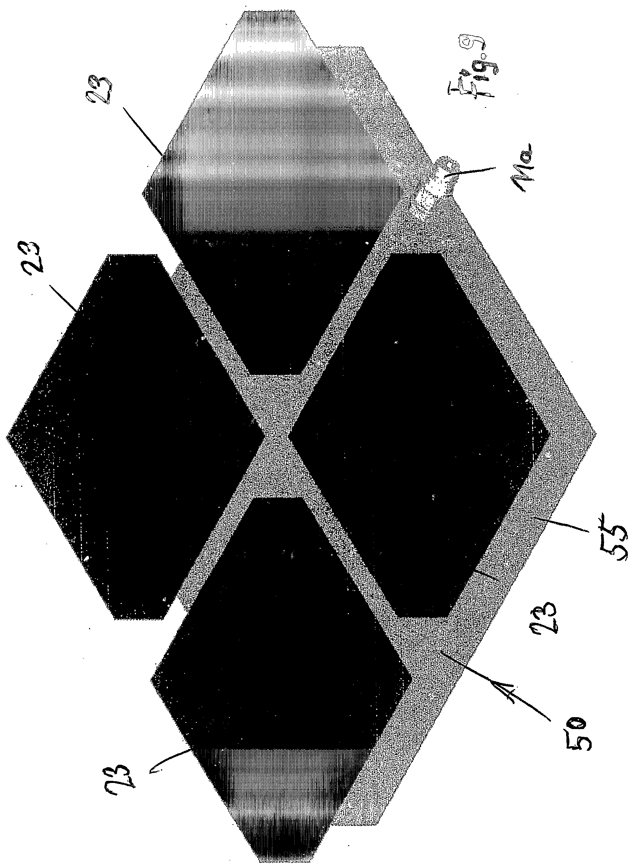

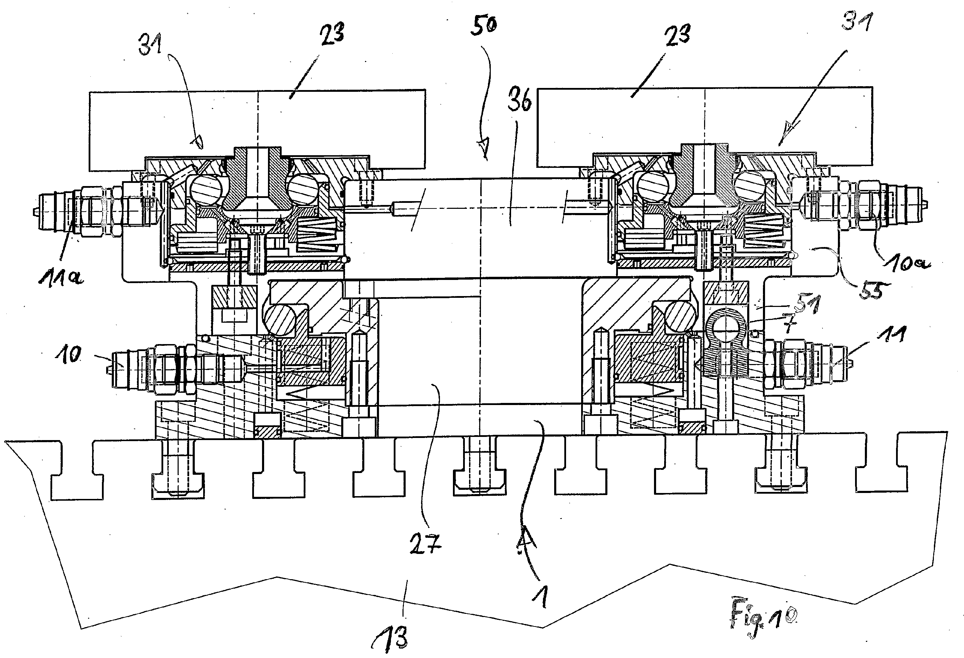

Die Figuren 8 bis 10 zeigen eine weitere Ausführungsform eines Spannsystems mit einem Adapterteil 50, welches in der allgemeinen Beschreibung auch als Vierfach-Huckepack-Adapter bezeichnet wurde. Diese Ausführungsform zeichnet sich dadurch aus, dass in einem Adaptergehäuse 35 insgesamt vier adapterseitige Spannsysteme 31 vorhanden sind, die alle gemeinsam von jeweils einem Ölanschluss 10a und/oder einem Luftanschluss 11a versorgt werden. Die Einzelheiten zeigt hierbei die Schnittdarstellung nach Figur 10, wobei Figur 9 zeigt, dass jedes Spannsystem 31 mit einer zugeordneten Werkstückpalette 23 zusammenarbeitet.

In Figur 10 ist erkennbar, dass alle adapterseitigen Spannsysteme 31 zentral von dem Luftanschluss 11a versorgt werden und dass das Drucköl ebenfalls zentral über den adapterseitigen Ölanschluss10azugeführt wird.

Die Figur 10 zeigt auch, dass die zentralen und zentrisch zueinander angeordneten Bohrungen 27, 36 von Einbauten freigehalten sind, so dass eine derartige Anordnung sogar auf einer Drehmaschine verwendet werden kann, um dort Stangen und Rohre oder Bearbeitungswerkzeuge in Richtung der Drehachse hindurch zu führen.

Für kleine Stichmasse reicht es aus, die relativ kleinen Werkstückpaletten 23 mit relativ großer Bauhöhe über dem Maschinentisch 13 anzuordnen. Dies bedeutet, dass der Außenumfang des Adapterteils 50 etwa dem Außenumfang des basisseitigen Spannsystems 1 entspricht, so dass die beiden Teile horizontal übereinander liegend eingespannt sind.

Hierbei liegt der bodenseitige Ringansatz 51 des Adapterteils 50 auf der zugeordneten Auflagefläche des basisseitigen Spannsystems auf.

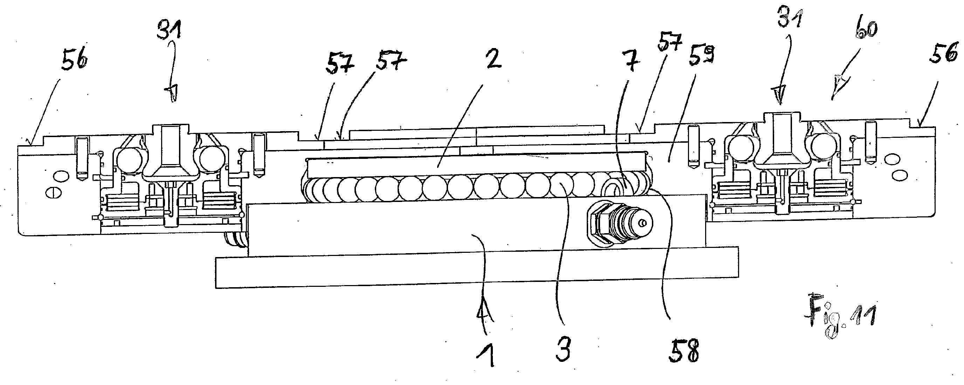

Falls ein größerer Außendurchmesser für die adapterseitigen Spannsysteme 31 benötigt wird, ist es möglich, die beiden Systeme nicht horizontal übereinander zu schichten (stapeln), sondern das adapterseitige Spannsystem seitlich an dem basisseitigen Spannsystem zu befestigen, wie dies in Figur 11 dargestellt ist. Hier ist erkennbar, dass der vorher erwähnte Ringansatz 51 nicht horizontal auf dem basisseitigen Spannsystem 1 aufgesetzt ist, sondern an diesem vorbeigeführt ist und seitlich am Basiszylinder vorbei greift.

Dadurch wird ein Adapterteil 60 geschaffen, mit dem es erstmals gelingt, separate, adapterseitige Spannsysteme 31 mit relativ großem Abstand voneinander anzuordnen.

Es wird im übrigen ein außenliegender Zentrierbund 56 für die Auflage einer Werkstückpalette oder eines anderen Teils gebildet. Ferner sind innenliegende Auflageflächen 57 für die Zentrierung und Festlegung dieser Werkstückpalette vorhanden, wobei entsprechende Anlageflächen vorhanden sind, die in zwei zueinander senkrechten Richtungen ausgerichtet sind.

Nur beispielhaft ist dargestellt, dass an der Bodenseite des niedrig bauenden Adapterteils 60 entsprechende Kugelanlageflächen 58 für die Verriegelungskugeln 3 des basisseitigen Spannsystems 1 angeordnet sind.

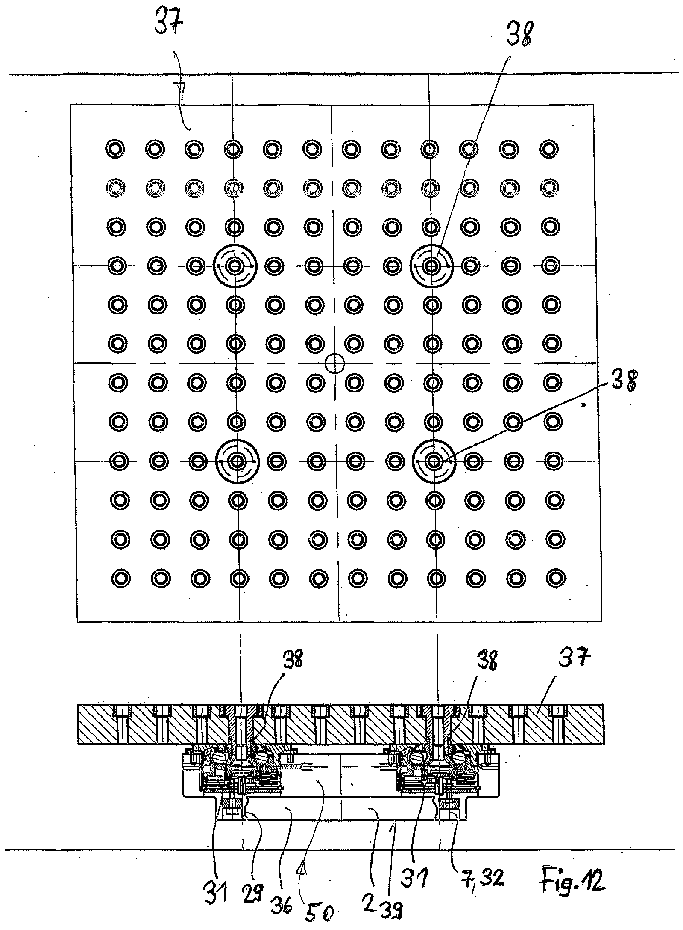

Die Figur 12 zeigt in zwei voneinander verschiedenen Darstellungen zunächst im oberen Teil eine Draufsicht auf eine Vierfach-Lochraster-Palette 37, an der insgesamt vier im Abstand voneinander angeordnete Einzugsnippel 38 angeordnet sind.

Der untere Teil der Figur 12 zeigt, dass diese Einzugsnippel 38 jeweils mit adapterseitigen Spannsystemen 31 des Adapterteils 50 zusammenwirken, so dass die Vierfach-Lochraster-Palette 37 an insgesamt vier Einzugsnippeln 38 mit zugeordneten Spannsystemen 31 auf einem basisseitigen Spannsystem 1 festgelegt ist.

Im allgemeinen Beschreibungsteil wurde auch darauf hingewiesen, dass die flächenmäßig durchgehende Lochrasterpalette 37 nach Figur 12 auch in einzelne Lochrasterpaletten 23 unterteilt sein kann, so wie dies anhand der Figur 9 dargestellt wurde.

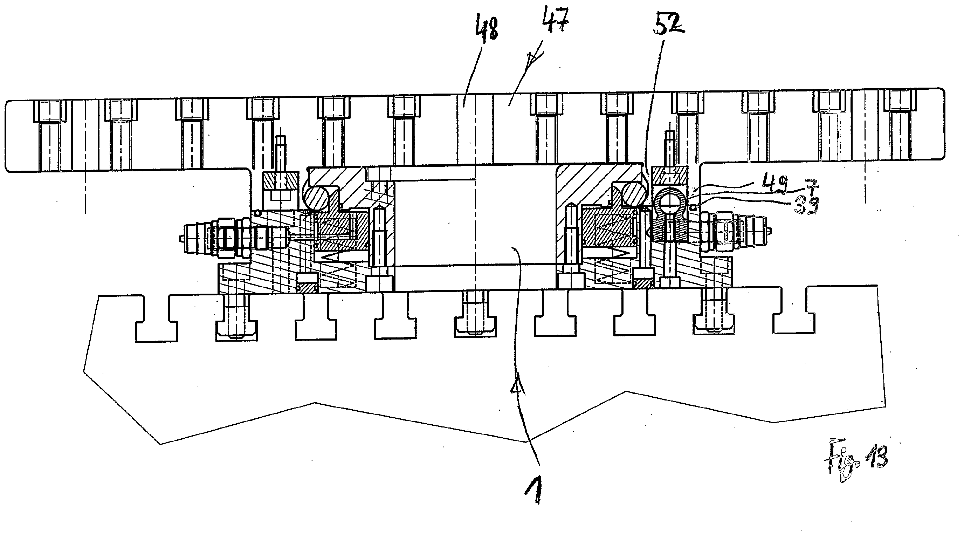

Die Figur 13 zeigt, dass die Lochrasterpalette 47 auch unmittelbar auf einem basisseitigen Spannsystem 1 befestigt werden kann. In diesem Fall ist an der Unterseite der Lochrasterpalette 37 der axial nach unten angeordnete Ringansatz 49, der auf der zugeordneten Auflage 6 des basisseitigen Spannsystems 1 anliegt, und ferner ist radial einwärts im Abstand von diesem Ringansatz 49 ein weiterer Klemmansatz 52 ausgebildet, an dessen Innenumfang die entsprechenden Klemmschrägen für den Eingriff der Verriegelungkugeln 3 des basisseitigen Spannsystems 1 vorgesehen sind.

Die Unterseite der Lochrasterpalette 47 ist aus Gewichtsersparnisgründen freigestellt, um Gewicht zu sparen.

Bei der Konfiguration der Figur 13 ist das Adapterteil des erfindungsgemäßen Schnellspannsystems abwesend. Bei dieser Konfiguration ergibt sich der Vorteil, dass im Mittenbereich der Lochrasterpalette 47 eine zentrische Zentrierbohrung 48 vorgesehen ist, von der aus sämtliche Masse für die Bearbeitung der Werkstücke ausgehen und die auch zur Zentrierung auf dem basisseitigen Spannsystems 1 dient.

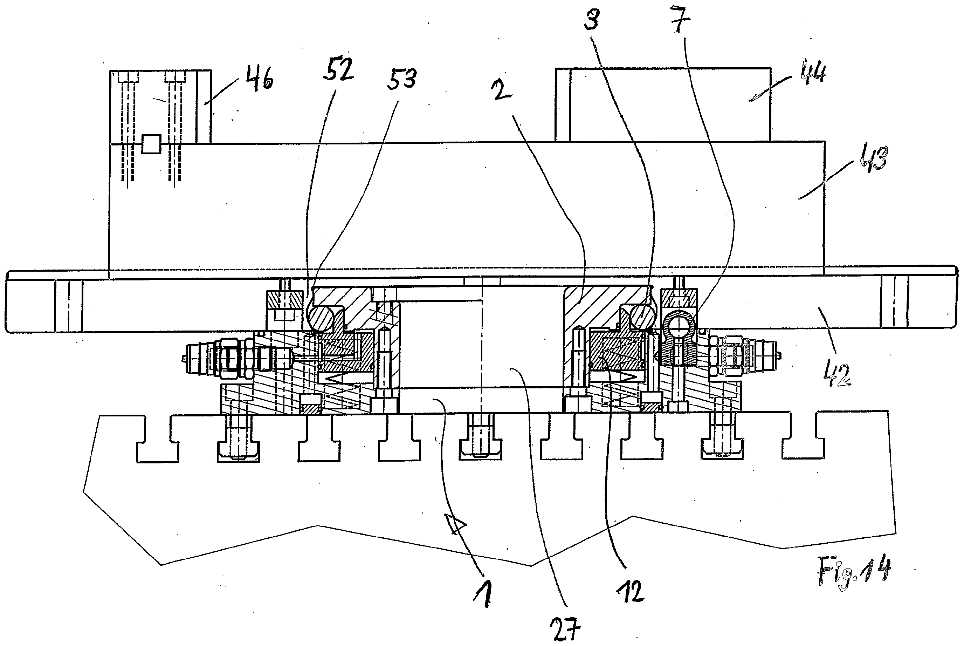

Die Figur 14 zeigt als Abweichung der Konfiguration nach Figur 13, dass anstatt der Befestigung einer Lochrasterpalette 47 auch ein entsprechender Schraubstock 43 unmittelbar auf dem basisseitigen Spannsystems 1 festgelegt werden kann, wobei an der Unterseite dieses Schraubstockes 43 wiederum die vorher erwähnten Teile 49, 52 angeordnet sind, um mit den basisseitigen Verriegelungskugeln 3 zusammen zu wirken. Diese Konfiguration fällt nicht unter die beigefügten Ansprüche.

Auf der Oberseite des Schraubstockes 43 sind hierbei ein oder mehrere Verstellbacken 44 und ein oder mehrere Festbacken 46 angeordnet.

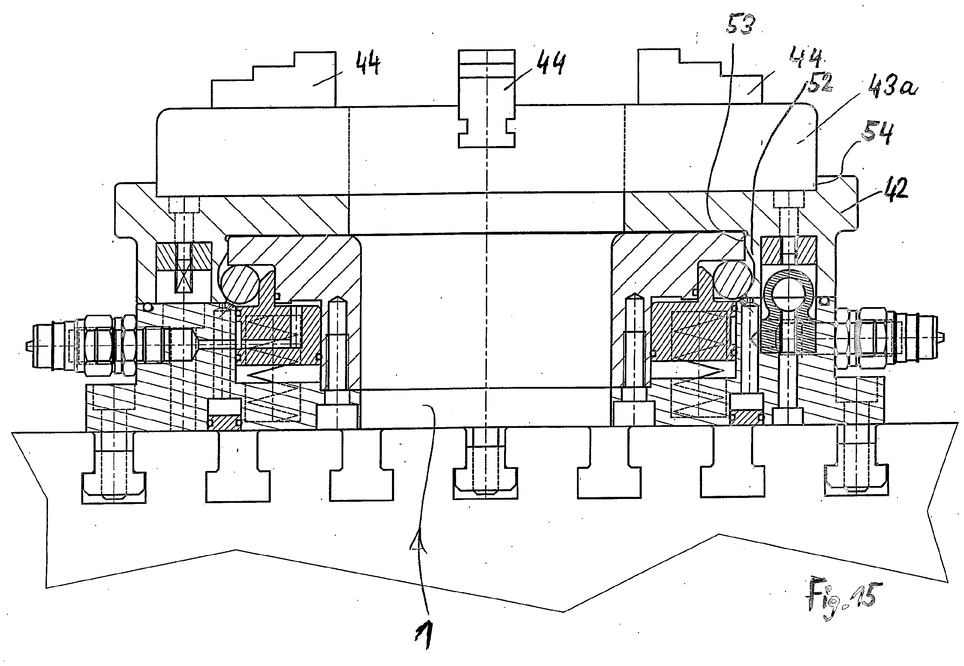

In Figur 15 wird ein Backenfutter 43a mit senkrecht zueinander stehenden Zentrieransätzen 54 auf der Oberseite der Werkstückpalette 52 festgelegt. Diese Konfiguration fällt nicht unter die beigefügten Ansprüche. Die Werkstückpalette 52 ist wiederum mit ihrer Unterseite mit dem basisseitigen Spannsystem 1 eingespannt. In Figur 15 sind ausschliesslich Verstellbacken 44 gezeigt.

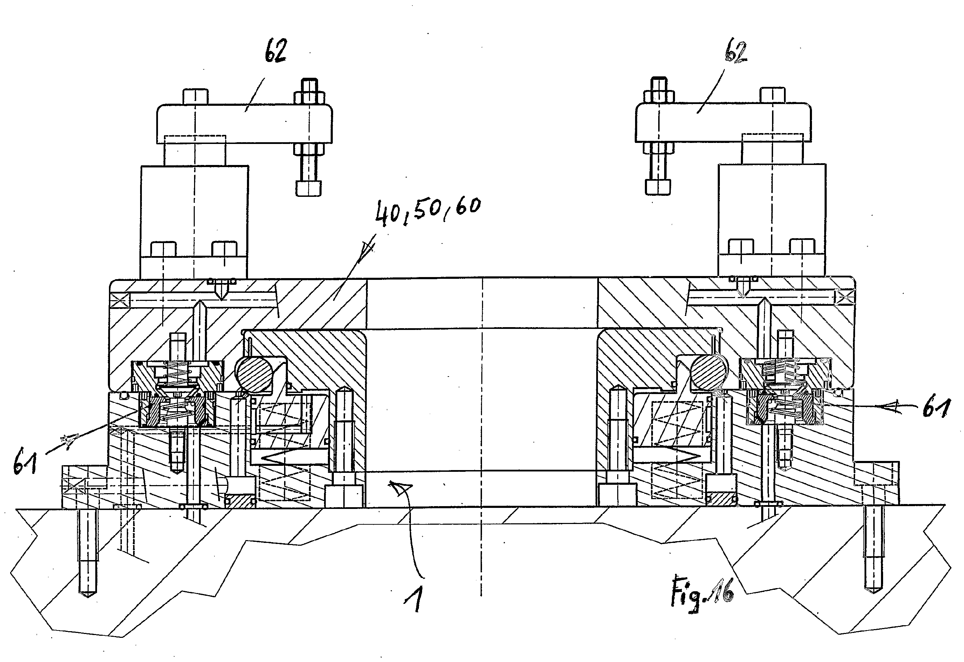

Die Figuren 16 bis 21 zeigen verschiedene Arten von Mediendurchführungen, die erforderlich sind, um die Medien von dem basisseitigen Spannsystem 1 in das adapterseitige Spannsystem 31 einzuführen. Gleichzeitig sind auch Mediendurchführungen dargestellt, die eine Weiterführung des Mediums über das Adapterteil hinaus in die auf dem Adapterteil befestigten Spannsysteme zur Festsetzung von Werkstücken zeigen.

In Figur 16 ist eine erste Art einer starren Mediendurchführung 61 dargestellt, aus der sich ergibt, wie von dem basisseitigen Ölanschluss das Drucköl in das Adapterteil 40, 50, 60 eingeführt wird. Es handelt sich generell bei den nachfolgend beschriebenen Mediendurchführungen um Hochdruckkupplungen, bei denen das eine Teil in dem basisseitigen Spannsystem und das andere Teil in dem Adaptersystem integriert ist. Es können daher sämtliche Arten von Mediendurchführungen verwendet werden. Bei den hier vorgeschlagenen Mediendurchführungen ergibt sich aber der Vorteil, dass eine besonders einfache und sichere Betätigung bei der Kupplung der beiden Systeme gegeben ist.

Figur 16 zeigt, dass mit zwei verschiedenen Mediendurchführungen 61 Drucköl zu dem adapterseitigen Spannsystem zugeführt wird.
Darüber hinaus ist es auch möglich, das Drucköl von dem adapterseitigen Spannsystem in die darüber angeordneten Spanner 62 einzuführen, um damit auf dem Adapterteil entsprechende Werkstücke hydraulisch oder pneumatisch einzuspannen.

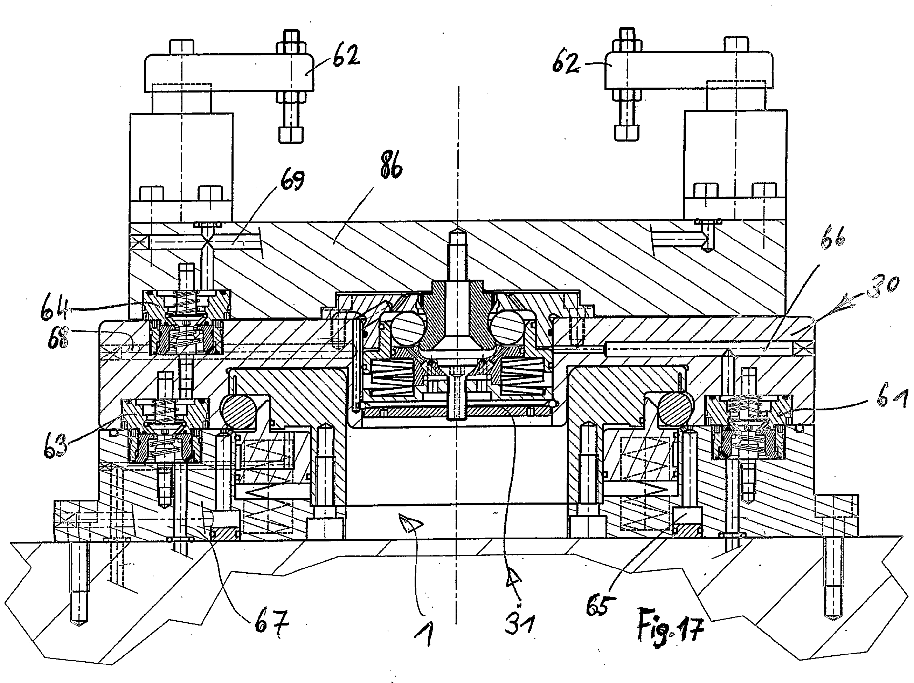

Die Figur 17 zeigt eine mehrfach Mediendurchführung, wobei die Mediendurchführungen luftschlüssig öder flüssigkeitsleitend miteinander verbunden sind. Die beiden Mediendurchführungen 63, 64 dienen zur Weiterleitung von Drucköl. Das Drucköl wird aus dem basisseitigen Spannsystem 1 über den Ölkanal 67 in das Adapterteil 30 hindurch geleitet. Von dieser Mediendurchführung ausgehend gelangt das Drucköl in die Mediendurchführung 64 und von dort aus in die Ölkanäle 69 einer darüber angeordneten Palette 86, auf der entsprechende Spannwerkzeuge 62 angeordnet sind.

Die Mediendurchführung 61 auf der rechten Seite in Figur 17 dient zur Durchführung von Öl für das Lösen des Spannsystems 31 in dem Adapterteil 30.

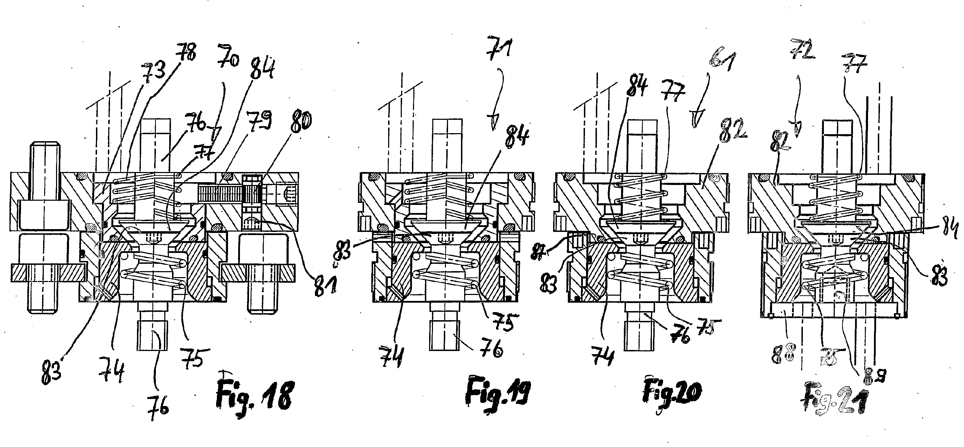

Die Figuren 18 bis 21 zeigen verschiedene Mediendurchführungen 61, 63, 70, 71, 72.

In Figur 18 ist eine Mediendurchführung 70 dargestellt, die mechanisch ausschaltbar ist.

Hierbei ragt ein unter der Wirkung einer Feder 77 federbelastet verschiebbarer Schiebekolben 73 aus der unteren Bodenfläche des oberen Gehäuseteils heraus und kommt über entsprechende Dichtflächen zur stirnseitigen Anlage an einem gegenüberliegend angeordneten Schiebekolben 74, der ebenfalls unter der Wirkung einer Feder 75 steht.

Wichtig ist, dass beim Aufsetzen der beiden Teile ein gleichzeitiges Dichten der aneinander anliegenden Dichtflächen und ein gleichzeitiges Öffnen des Medienkanals stattfindet. Zu diesem Zweck verschiebt der obere, federbelastete Schiebekolben 73 den unteren Schiebekolben 74 in die in Figur 18 dargestellte Position und gleichzeitig legt sich der Ventilteller 83 des Ventilbolzens 76 an den Ventilteller 84 des Ventilbolzens 76 an.

Die Feder 78 belastet den Schiebekolben 73 in Richtung auf den gegenüberliegenden Schiebekolben 74 vor.

Sobald die beiden Gehäuseteile miteinander verbunden werden, dichtet die Stirnseite des federbelastet verschiebbaren Schiebekolbens 73 an der zugeordneten feststehenden Stirnseite des Schiebekolbens 74 ab und gleichzeitig wird der Durchlasskanal geöffnet, weil durch die Verschiebung des Schiebekolbens der Durchlasskanal freigegeben wird. Sobald die beiden Gehäuseteile voneinander getrennt werden, sorgt die Feder 77 an dem verschiebbaren Ventilbolzen 76 dafür, dass beim Abheben der beiden Gehäuseteile die Durchführung wieder abgedichtet wird, weil die entsprechenden Konusschrägen der Ventilteller 83, 84 die Durchflussöffnung versperren.

Das Absperren geht synchron mit dem Abheben der beiden Gehäuseteile voneinander. Die Mediendurchführung 70 ist im übrigen mechanisch verriegelbar, und zwar über eine Blockierzahnstange 79, die mit einem Ritzel 80 längenverstellbar ist, wobei das Ritzel 80 über einen Sechskant 81 verdrehbar ist.

Mit dem Eingriff der Blockierzahnstange 79 in den Verschiebungsweg des oberen Ventilbolzens 76 wird dieser damit in einer Stellung fixiert. Bei pulsierenden Ölstößen wird damit verhindert, dass sich die Mediendurchführung ungewollt schließt.

In Figur 19 entfällt die Blockierung mit der Blockierzahnstange 79, und es gelten die gleichen Erläuterungen, wie sie anhand der Figur 18 gegeben wurden.

Die Figur 20 zeigt eine weitere Mediendurchführung 72, die starr ist, d. h. der vorher als verschiebbar dargestellte Verschiebekolben 73 ist nun als starrer Körper, nämlich als Gehäuse 82, ausgebildet. Die Mediendurchführung 61 ist auch in dem vorher genannten Ausführungsbeispiel teilweise dargestellt worden.

Beim Andocken der beiden Teile wird die Mediendurchführung damit automatisch geöffnet und bleibt geöffnet. Sobald der Ringansatz 87 in die gegenüberliegende Gehäusebohrung einfährt, wird das Ventil geöffnet und bleibt geöffnet.

Die Figur 21 zeigt eine Mediendurchführung 72, die starr ist, wobei lediglich der Ventilbolzen 76 entfernt wurde und stattdessen lediglich eine gehäuseseitige Scheibe 88 vorhanden ist, die einen Gewindezapfen 89 trägt, der mit dem Ventilteller 83 verschraubt ist.

Ansonsten gelten die gleichen Erläuterungen wie bei den vorstehend beschriebenen Ausführungsbeispiele.

Vorteil dieser Konfiguration ist, dass an der Unterseite kein herausragender Ventilbolzen 76 vorhanden ist.

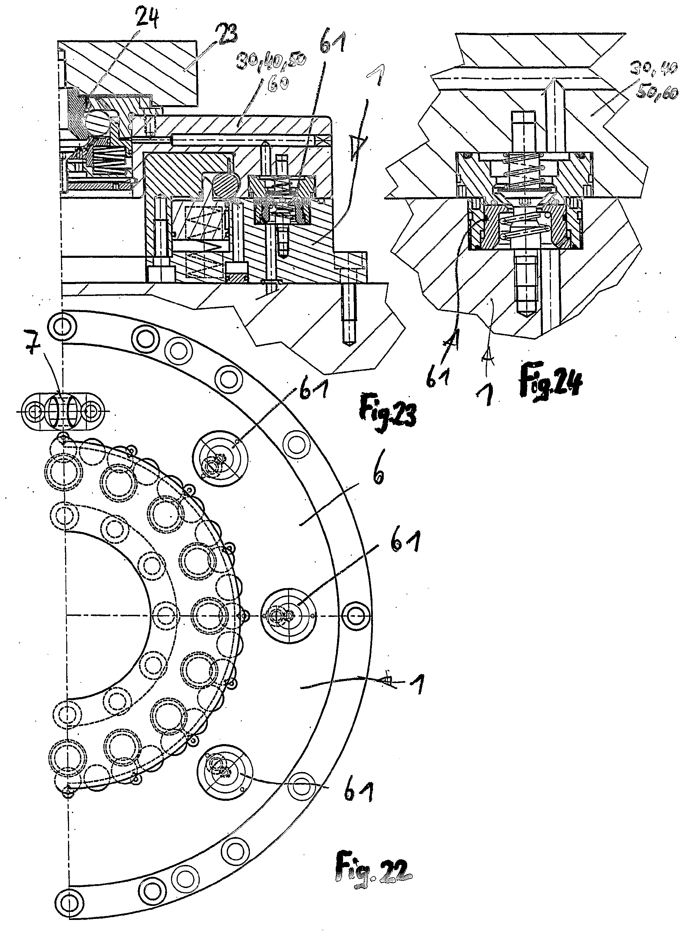

Figur 22 zeigt die Draufsicht auf das basisseitige Spannsystem 1 mit Darstellung der verschiedenen Mediendurchführungen 61. Gleichzeitig ist auch die Draufsicht auf das Unterteil der Zentrierung 7 wischen Deckel und einer (nicht dargestellten, darauf aufzusetzenden) Werkstückpalette gezeigt.

Die Figur 23 zeigt ein Schnellspannsystem mit einem basisseitigen Spannsystem und einem Adapterteil 30, 40, 50, 60, welches seinerseits ein Spannsystem, ähnlich wie das das Spannsystem 1 trägt und in das eine kleinere Werkstückpalette 23 über den Einzugsnippel 24 eingespannt ist. Bei dieser Ausführung sind Mediendurchführungen vom Spannsystem 1 in das Adapterteil 30, 40, 50, 60 dargestellt. Von diesen Mediendurchführungen erstreckt sich eine Leitung für das Verriegelungssystem, um den Einzugsnippel 24 zu betätigen.

Die Figur 24 ist ein vergrößerter Schnitt durch die Mediendurchführung 61.

Mit der Erfindung wird ein universelles Schnellspannsystem beschrieben, welches einen schnellen Wechsel der Bearbeitungssituation gewährleistet, weil Bearbeitungspaletten unterschiedlichen Durchmessers und Größe schnell (mittelbar) mit Hilfe eines Adapterteils gespannt werden können oder unmittelbar auf einem basisseitigen Spannsystem festgelegt werden können.

### Zeichnungs-Legende

- 1: Spannsystem (Basiszylinder)
- 2: Zentriergehäuse
- 3: Verriegelungskugel
- 4: Zentrierrand
- 5: Schutzring
- 6: Auflage
- 7: Zentrierung
- 8: Ausblasloch
- 9: Gehäuse
- 10: Ölanschluss 10a
- 11: Luftanschluss 11a
- 12: Verriegelungskolben
- 13: Maschinentisch
- 14: T-Nute
- 15: T-Nutenstein
- 16: Befestigungsschraube
- 17: Befestigungsschraube
- 18: Zentrieransatz
- 19: Ringkanal
- 20: Dichtring
- 21: Feder
- 22: Druckraum
- 23: Werkstückpalette
- 24: Einzugsnippel
- 25: Aufnahmebohrung
- 26: Verriegelungskugel
- 27: Aufnahmebohrung (Sp.S.1)
- 28: Aufnahmeraum
- 29: Kugelanlagefläche
- 30: Adapterteil
- 31: Spannsystem
- 32: Zentriernut
- 33: Zentrierkopf (gefedert)
- 34: Anschraubring
- 35: Adaptergehäuse
- 36: Zentrale Aufnahme (Adapter)
- 37: Lochrasterpalette
- 38: Einzugsnippel
- 39: Auflagefläche
- 40: Adapterteil
- 41: Ansatz
- 42: Werkstückpalette
- 43: Schraubstock 43a Backenfutte
- 44: Verstellbacke
- 45: Adaptergehäuse
- 46: Festbacke
- 47: Lochrasterpalette
- 48: Zentrierbohrung
- 49: Ringansatz
- 50: Adapterteil
- 51: Ringansatz
- 52: Klemmansatz
- 53: Zentrieranschlag
- 54: Zentrieransatz
- 55: Adaptergehäuse
- 56: Zentrierbund
- 57: Auflagefläche
- 58: Kugelanlagefläche
- 59: Adaptergehäuse
- 60: Adapterteil
- 61: Mediendurchführung (starr)
- 62: Spanner
- 63: Mediendurchführung
- 64: Mediendurchführung
- 65: Luftkanal
- 66: Ölkanal
- 67: Ölkanal
- 68: Luftkanal
- 69: Ölkanal
- 70: Mediendurchführung (mech.aussch.)
- 71: Mediendurchführung (autom.aussch.)
- 72: Mediendurchführung (starr)
- 73: Schiebekolben (oben)
- 74: Schiebekolben (unten)
- 75: Feder
- 76: Ventilbolzen (starr)
- 76: a Ventilbolzen (gefedert)
- 77: Feder
- 78: Feder
- 79: Blockierzahnstange
- 80: Ritzel
- 81: Sechskant
- 82: Gehäuse
- 83: Ventilteller (unten)
- 84: Ventilteller (oben)
- 85: Bearbeitungswerkzeug
- 86: Palette
- 87: Ringansatz
- 88: Scheibe
- 89: Gewindezapfen

## Patentansprüche

1. Schnellspannsystem für die Einspannung von Werkstückpaletten (23, 37), auf denen zu bearbeitende Werkstücke befestigt sind, umfassend ein basisseitiges Spannsystem (1), das auf einem Maschinentisch (13), einer Aufspannplatte oder einem Bearbeitungsturm befestigt werden kann und als Schnellspannzylinder mit radial nach außen gerichteten Verriegelungskugeln (3) ausgebildet ist,
wobei in einem Gehäuse des Schnellspannsystems eine zentrale Aufnahmebohrung (25) ausgebildet ist,
wobei das Schnellspannsystem mindestens ein Adapterteil (30, 40, 50, 60) aufweist, wobei das Adapterteil (30, 40, 50, 60) mit radial nach innen gerichteten Kugelanlageflächen (29) versehen ist, die mit den radial nach außen gerichteten Verriegelungskugeln des basisseitigen Spannsystems (1) zusammenwirken, um das Adapterteil (30, 40, 50, 60) lösbar mit dem basisseitigen Spannsystem (1) zu verbinden,
wobei in dem Adapterteil (30, 40, 50, 60) mindestens ein selbstständig und unabhängig von dem basisseitigen Spannsystem (1) arbeitendes Spannsystem angeordnet ist und
wobei das Adapterteil (30, 40, 50, 60) unmittelbar auf einem Maschinentisch oder einer Aufspannplatte festlegbar ist,
**dadurch gekennzeichnet,**
**dass** in die zentrale Aufnahmebohrung (25) ein Einzugsnippel (24) eingreifen kann, der an der Unterseite der aufzuspannenden Werkstückpalette angeordnet ist und der mit einem im Gehäuse des Schnellspannsystems angeordneten Verriegelungssystem (26) zusammenwirken kann, und
**dass** das Spannsystem des Adapterteils (30, 40, 50, 60) das für den Einzugsnippel (24) bestimmte Verriegelungssystem (26) einschließt und einen Schnellspannzylinder umfasst.

2. Schnellspannsystem nach Anspruch 1, **dadurch gekennzeichnet, dass** das Schnellspannsystem einzelne und voneinander getrennte Werkstückpaletten oder eine größere Werkstückpalette umfasst, wobei das Adapterteil (30, 40, 50, 60) die einzelnen und voneinander getrennten Werkstückpaletten spannt oder die größere Werkstückpalette sich in mehrfachem Eingriff mit dem adapterseitigen Spannsystem befindet.

3. Schnellspannsystem nach einem der Ansprüche 1 bis 2, **dadurch gekennzeichnet, dass** das basisseitige Spannsystem (1) eine zentrale Aufnahmebohrung aufweist, die von Einbauten frei ist.

4. Schnellspannsystem nach einem der Ansprüche 1 bis 3, **dadurch gekennzeichnet, dass** das Adapterteil auf das basisseitige Spannsystem (1) von oben aufsetzbar ist.

5. Schnellspannsystem nach einem der Ansprüche 1 bis 4, **dadurch gekennzeichnet, dass** das Adapterteil das basisseitige Spannsystem (1) mindestens teilweise übergreift.

6. Schnellspannsystem nach einem der Ansprüche 1 bis 5, **dadurch gekennzeichnet, dass** mindestens eine Mediendurchführung von dem basisseitigen Spannsystem zu dem darauf aufgesetzten Adapterteil vorhanden ist.

7. Schnellspannsystem nach einem der Ansprüche 1 bis 6, **dadurch gekennzeichnet, dass** das Schnellspannsystem eine Mediendurchführung umfasst, wobei die Mediendurchführung in dem basisseitigen Spannsystem (1) angeordnet ist und in das auf diesem Spannsystem eingespannte Adapterteil (30, 40, 50, 60) hinein führt.

8. Schnellspannsystem nach Anspruch 7, **dadurch gekennzeichnet, dass** die Mediendurchführung (61, 64) durch das Adapterteil (30, 40, 50, 60) hindurch in Spannwerkzeuge (62) geführt ist.

9. Schnellspannsystem nach einem der Ansprüche 6 bis 8, **dadurch gekennzeichnet, dass** die Mediendurchführung (70) durch Fixieren eines Ventilbolzens (76) der Mediendurchführung (70) in einer Stellung desselben mechanisch verriegelbar ist.

## Claims

1. A rapid-action clamping system for clamping workpiece pallets (23, 37), on which workpieces that are to be machined are fastened, said system comprising a base-side clamping system (1), which can be fastened to a machine table (13), a clamping plate or a machining tower and is formed as a rapid-action clamping cylinder with radially outwardly directed locking balls (3),
wherein a central receiving bore (25) is formed in a housing of the rapid-action clamping system,
wherein the rapid-action clamping system comprises at least one adapter part (30, 40, 50, 60), wherein the adapter part (30, 40, 50, 60) is provided with radially inwardly directed ball contact faces (29), which cooperate with the radially outwardly directed locking balls of the base-side clamping system (1) in order to connect the adapter part (30, 40, 50, 60) releasably to the base-side clamping system (1),
wherein at least one clamping system operating autonomously and independently of the base-side clamping system (1) is arranged in the adapter part (30, 40, 50, 60), and
wherein the adapter part (30, 40, 50, 60) can be fastened directly to a machine table or a clamping plate,
**characterised in that**
a pull-stud (24) can engage in the central receiving bore (25) and is arranged on the underside of the workpiece pallet that is to be clamped and can cooperate with a locking system (26) arranged in the housing of the rapid-action clamping system, and
**in that** the clamping system of the adapter part (30, 40, 50, 60) includes the locking system (26) intended for the pull-stud (24) and comprises a rapid-action clamping cylinder.

2. A rapid-action clamping system according to claim 1, **characterised in that** the rapid-action clamping system encompasses individual workpiece pallets separate from one another or one larger workpiece pallet, wherein the adapter part (30, 40, 50, 60) clamps the individual workpiece pallets separate from one another or the larger workpiece pallet is engaged a number of times by the adapter-side clamping system.

3. A rapid-action clamping system according to either one of claims 1 to 2, **characterised in that** the base-side clamping system (1) comprises a central receiving bore which is free from fittings.

4. A rapid-action clamping system according to any one of claims 1 to 3, **characterised in that** the adapter part can be fitted onto the base-side clamping system (1) from above.

5. A rapid-action clamping system according to any one of claims 1 to 4, **characterised in that** the adapter part at least partially overlaps the base-side clamping system (1).

6. A rapid-action clamping system according to any one of claims 1 to 5, **characterised in that** at least one media passage is provided from the base-side clamping system to the adapter part fitted thereon.

7. A rapid-action clamping system according to any one of claims 1 to 6, **characterised in that** the rapid-action clamping system comprises a media passage, wherein the media passage is arranged in the base-side clamping system (1) and leads into the adapter part (30, 40, 50, 60) clamped on this clamping system.

8. A rapid-action clamping system according to claim 7, **characterised in that** the media passage (61, 64) is guided through the adapter part (30, 40, 50, 60) in clamping tools (62).

9. A rapid-action clamping system according to any one of claims 6 to 8, **characterised in that** the media passage (70) can be mechanically locked by fixing a valve bolt (76) of the media passage (70) in one position thereof.

## Revendications

1. Système de serrage rapide servant à serrer des palettes pour pièces (23, 37) sur lesquelles sont fixées des pièces à usiner, comprenant un système de serrage côté base (1) pouvant être fixé sur une table de machine (13), une plaque de fixation ou une tour d'usinage et conçu comme un cylindre de serrage rapide avec des billes de verrouillage (3) dirigées radialement vers l'extérieur, un orifice de réception central (25) étant aménagé dans un carter du système de serrage rapide, le système de serrage rapide présentant au moins une pièce d'adaptation (30, 40, 50, 60), cette pièce d'adaptation (30, 40, 50, 60) étant pourvu de faces de butée des billes (29) dirigées radialement vers l'intérieur et qui coopèrent avec les billes de verrouillage (29), dirigées radialement vers l'extérieur, du système de serrage (1) côté base, afin de relier la pièce d'adaptation (30, 40, 50, 60) de façon détachable au système de serrage côté base (1), au moins un système de serrage, travaillant de manière autonome et indépendante du système de serrage (1) côté base, étant disposé dans la pièce d'adaptation (30, 40, 50, 60) et la pièce d'adaptation (30, 40, 50, 60) pouvant être immobilisée directement sur une table de machine ou une plaque de fixation,
**caractérisé en ce qu'**un mamelon d'insertion (24) peut s'engager dans l'orifice de réception central (25) et est disposé sur le dessous de la palette à pièces à serrer et peut coopérer avec un système de verrouillage (26) disposé dans le carter du système de serrage rapide, et **en ce que** le système de serrage de la pièce d'adaptation (30, 40, 50, 60) inclut le système de verrouillage (26) destiné au mamelon d'insertion (24) et comprend un cylindre de serrage rapide.

2. Système de serrage rapide selon la revendication 1, **caractérisé en ce qu'**il comprend différentes palettes à pièces séparées l'une de l'autre ou bien une grande palette à pièces, la pièce d'adaptation (30, 40, 50, 60) serrant les différentes palettes à pièces séparées l'une de l'autre ou bien la grande palette à pièces entrant en prise multiple avec le système de serrage côté pièce d'adaptation.

3. Système de serrage rapide selon l'une quelconque des revendications 1 à 2, **caractérisé en ce que** le système de serrage côté base (1) présente un orifice de réception central exempt d'accessoires.

4. Système de serrage rapide selon l'une quelconque des revendications 1 à 3, **caractérisé en ce que** la pièce d'adaptation peut être posée depuis le haut sur le système de serrage côté base (1).

5. Système de serrage rapide selon l'une quelconque des revendications 1 à 4, **caractérisé en ce que** la pièce d'adaptation saisit le système de serrage côté base (1) par le dessus au moins en partie.

6. Système de serrage rapide selon l'une quelconque des revendications 1 à 5, **caractérisé en ce qu'**il dispose d'au moins une traversée de fluide depuis le système de serrage côté base vers la pièce d'adaptation posée dessus.

7. Système de serrage rapide selon l'une quelconque des revendications 1 à 6, **caractérisé en ce que** le système de serrage rapide comprend une traversée de fluide, la traversée de fluide étant disposée dans le système de serrage côté base (1) et conduisant vers l'intérieur de la pièce d'adaptation (30, 40, 50, 60) serrée sur ce système de serrage.

8. Système de serrage selon la revendication 7, **caractérisé en ce que** la traversée de fluide (61, 64) traverse la pièce d'adaptation (30, 40, 50, 60) jusque dans des outils de serrage (62).

9. Système de serrage rapide selon l'une quelconque des revendications 6 à 8, **caractérisé en ce que** la traversée de fluide (70) peut être verrouillée mécaniquement par l'immobilisation d'une goupille de soupape (76) de la traversée de fluide (70) dans une position de cette goupille.
